(19) Europäisches Patentamt
European Patent Office
Office européen des brevets

(11) Veröffentlichungsnummer : **0 421 214 B1**

(12) # EUROPÄISCHE PATENTSCHRIFT

(45) Veröffentlichungstag der Patentschrift :
**02.02.94 Patentblatt 94/05**

(51) Int. Cl.$^5$ : **C08G 18/08,** C08G 18/10, C08G 18/24, C08G 18/28, C08G 18/32, C08G 18/80

(21) Anmeldenummer : **90118257.6**

(22) Anmeldetag : **22.09.90**

(54) **Verfahren zur Herstellung von segmentierten Polyurethanharnstoff-Elastomerlösungen, sowie Fäden und Folien daraus.**

(30) Priorität : **03.10.89 DE 3932948**

(43) Veröffentlichungstag der Anmeldung :
**10.04.91 Patentblatt 91/15**

(45) Bekanntmachung des Hinweises auf die Patenterteilung :
**02.02.94 Patentblatt 94/05**

(84) Benannte Vertragsstaaten :
**DE FR GB IT**

(56) Entgegenhaltungen :
**EP-A- 0 007 594**
**EP-A- 0 077 989**
**DE-A- 2 500 921**
**FR-A- 2 364 935**

(73) Patentinhaber : **BAYER AG**
**D-51368 Leverkusen (DE)**

(72) Erfinder : **Frauendorf, Beatrix, Dr.**
**Charlottenburger Strasse 34**
**D-5090 Leverkusen (DE)**
Erfinder : **Kausch, Michael, Dr.**
**Semmelweisstrasse 151**
**D-5000 Köln 80 (DE)**
Erfinder : **Meyer, Rolf-Volker, Dr.**
**Buchheimer Strasse 23**
**D-4150 Krefeld-Bockum (DE)**

EP 0 421 214 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist ein Verfahren zur Herstellung von hochkonzentrierten und überraschend in ihrer Lösungsviskosität stabilen Lösungen von segmentierten Polyurethanharnstoff-Elastomeren in hochpolaren Lösungsmitteln wie Dimethylformamid und Dimethylacetamid ohne oder mit erheblich verminderter Verpastungstendenz, gekennzeichnet durch Verwendung bestimmter primärer und sekundärer cycloaliphatischer Monoamine oder cycloaliphatischer Monoisocyanate als Kettenabbrecher/Blockierungsmittel bei der Umsetzung von NCO-Prepolymeren auf Basis höhermolekularer Dihydroxyverbindungen und (vorzugsweise aromatischer) Diisocyanate mit aliphatischen und/oder cycloaliphatischen Diamin-Kettenverlängerungsmitteln. Die erfindungsgemäßen Kettenabbrecher zeigen unerwarteterweise auch Verbesserungen des Rohtons der Elastomerlösung und auch der Licht- und Schadgasechtheit der Fertigprodukte, vorzugsweise der Fäden.

Gegenstand der Erfindung sind auch entsprechend zusammengesetzte, spezielle Abbrecher enthaltende Elastomere, vorzugsweise in Form von Fäden, Folien oder Beschichtungen, welche verbesserte Licht- und Abgasechtheiten aufweisen.

Unter Elasthanfasern werden Fäden verstanden, die zu mindestens 85 Gew.-% aus segmentierten Polyurethan(harnstoff)en bestehen. Derartige Elasthanfasern werden üblicherweise hergestellt, indem zunächst ein langkettiges Diol (Makrodiol) mit einem Diisocyanat endständig verkappt wird, so das man ein Makrodiisocyanat (NCO-Prepolymer) erhält. Das NCO-Prepolymer wird dann in einem zweiten Schritt mit einem Kettenverlängerer, welcher üblicherweise aus einem Diamin besteht, zu einem hochmolekularen Polyurethanharnstoff umgesetzt. Üblicherweise werden die in der Prepolymerstufe synthetisierten Makrodiisocyanate in Lösung mit Diaminen umgesetzt. In der Regel beträgt die Feststoff-Endkonzentration 20-30 Gew.-%.

Diese Polyurethanharnstoffe sind so aufgebaut, daß das Makromolekül eine Segmentstruktur aufweist, d.h. aus kristallinen und amorphen Blöcken (Hartsegmente bzw. Weichsegmente) besteht. Die Hartsegmente wirken dann aufgrund ihrer Kristallinität als Fixpunkte des Netzwerkes und sind damit maßgebend für die Festigkeit der aus den Polymeren hergestellten Formkörper. Die Weichsegmente hingegen, deren Glasübergangstemperatur unterhalb der Gebrauchstemperatur liegen muß, sind für die Elastizität der Elastomeren maßgebend.

### Stand der Technik

Zur Verbesserung der Wirtschaftlichkeit (Schnellspinnen) und auch aus ökologischer Sicht (Senkung des Lösungsmittelanteils in der Elasthanspinnlösung) soll möglichst aus Elasthanspinnlösungen mit Feststoffkonzentrationen $\geqq$30 % versponnen werden. Bei diesen hohen Feststoffkonzentrationen treten jedoch Probleme hinsichtlich einer begrenzten Löslichkeit auf, insbesondere bei längeren Lagerzeiten der Spinnlösungen, die sich in einer Verpastung und/oder Viskostitätsaufbau äußert. Die so zunehmende Unlöslichkeit führt häufig dazu, daß die Elasthanlösung nicht mehr weiterverarbeitet/versponnen werden kann. Die Ursache dieser Phänomene kann dabei unterschiedlicher Art sein.

Folgende Ursachen können bei hochkonzentrierten Elasthanlösungen beispielsweise zur Verschlechterung der Löslichkeit führen:

(1) je niedriger der Lösungsmittelanteil wird, umso schneller tritt die Desolvatation der Weichsegmente, bestehend aus hochmolekularen Polyester- und/oder Polyetherdiolen (Makrodiolen), bevorzugtes Molekulargewicht von 2000, ein. Dieser Prozeß wird noch verstärkt, je höher das Molekulargewicht, z.B. 3000-8000, des Makrodiols ist.

Zudem sind Polyetherdiole in den üblichen Lösungsmitteln schwerer löslich als Polyesterdiole. Verstärkt wird die Desolvatation insbesondere bei Verwendung von Polyether-Polyesterdiol-Mischungen, da diese aufgrund der unterschiedlichen Löslichkeit von vornherein eine Entmischungstendenz durch Mikrophasentrennung aufweisen.

(2) Für besondere Anwendungszwecke, bei denen besonders hohe Festigkeiten und Thermostabilitäten erwünscht sind, wird ein höherer Diisocyanatanteil als üblich (NCO-Gehalt bezogen auf Feststoff $\geqq$2,5 Gew.-%) eingesetzt. Der dadurch im Elasthan bedingte hohe Anteil an Polyharnstoffsegmenten führt zu einer verminderten Löslichkeit und gesteigerter Verpastungstendenz der Elasthanlösung.

(3) Da bekanntermaßen eine Temperaturerhöhung zu einer Senkung der Lösungsviskosität führt, werden häufig hochkonzentrierte Elasthanlösungen bei erhöhter Temperatur, beispielsweise 50°C, gelagert. Dies hat jedoch in vielen Fällen bereits nach 1 - 2 Tagen einen drastischen Viskositätsaufbau der Elasthanlösung zur Folge, der häufig auf einem Molekulargewichtsaufbau beruht. Es wird vermutet, daß es sich hier im wesentlichen um eine Endgruppenaminolyse handelt, bei der die sekundären Monoamine durch die primären Aminoendgruppen (aus den Diamin-Kettenverlängerungsmitteln wie Ethylendiamin) aus den Harnstoffbindungen verdrängt werden.

(4) Längeres Erhitzen von Elasthanlösungen oder -pasten - z.B. 2 bis 5 Stunden auf 80 bis 120°C führt zwar zumeist zu einem Molekülabbau - erkennbar am Rückgang des $\eta_{rel}$-Wertes der Polymersubstanz mit steigender Einwirkungsintensität-, der jedoch schlecht kontrollierbar verläuft, einen hohen Energieaufwand fordert und häufig zu nicht verspinnbaren Elastanlösungen führt.

Wenn die Polyadddition (Kettenverlängerung) in den üblicherweise dafür verwendeten polaren organischen Lösungsmitteln, insbesondere mit Ethylendiamin, durchgeführt wird, sinkt mit steigendem Molekulargewicht die Löslichkeit, so daß mit Verpastung gerechnet werden muß. Daher läßt man häufig die Polyaddition bis zu einer festgelegten Viskosität ablaufen und setzt einen monofunktionellen Kettenabbrecher, wie Dibutylamin, Octylamin, Butanonoxim (Houben Weyl Band E 20/Teil 2, S. 1642), vorzugsweise jedoch Diethylamin (Ullmann's Encyclopedia of Industrial Chemistry, Vol. A 10, S. 612), hinzu. Damit erhält man gleichzeitig eine engere Molekulargewichtsverteilung.

So wird in der DE-OS 2 323 393 die Herstellung von Polyurethanen mit einheitlichen und reproduzierbaren rheologischen Eigenschaften und konstantem Molekulargewicht beschrieben. Dazu werden sterisch gehinderte, sekundäre Alkohole der Formel

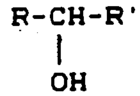

als Kettenabbrecher eingesetzt.

Verwendet man jedoch diese OH-funktionellen Kettenabbrecher bei der Herstellung von Polyurethanharnstoffen, ergeben sich Probleme hinsichtlich der geringeren Reaktivität gegenüber dem üblicherweise eingesetzten Kettenverlängerungsmittel Ethylendiamin. Dadurch, daß aufgrund der höheren Reaktivität des Ethylendiamins die Kettenverlängerung bevorzugt gegenüber dem Kettenabbruch abläuft, kommt es zu einem unkontrollierten Viskositätsaufbau mit erhöhter Verpastungstendenz. Dieser Effekt wird bei hochkonzentrierten Lösungen noch verstärkt.

Da das Abbrechen der Polyaddition mit monofunktionellen Alkoholen sehr langsam erfolgt, ist versucht worden, durch Einsatz monofunktioneller, niedermolekularer Oxime, vorzugsweise Butanonoxim, viskositätsstabile Polyurethanlösungen herzustellen (DE-OS 3 142 706). Es wird darin weiterhin beschrieben, daß man gegebenenfalls nach dem Abbruch der Polyadditionsreaktion mit Oxim die Reaktion bei erhöhter Temperatur fortführen kann.

Da man jedoch häufig hochkonzentrierte Elasthanlösungen bei höheren Temperaturen lagern muß, um die Lösungsviskosität zu erniedrigen, ist der Einsatz von Oximen unpraktikabel. So kann durch Erhöhung der Lagertemperatur auf 50°C der Oxim-Kettenabbrecher wieder freigesetzt werden, und es kommt zu einem unkontrollierten, starken Viskositätsaufbau in der Elasthanlösung, zusätzlich zu einer Freisetzung von Hydroxylamin, was aus ökologischen Gründen unerwünscht erscheint.

Gemäß der DE-OS 2 500 921 werden Polyurethane mit kontrollierter Viskositätseinstellung dadurch erhalten, daß man einem Reaktionsgemisch aus Polyhydroxylverbindungen und Polyisocyanaten bei Erreichen der gewünschen Endviskosität einen Überschuß eines Monoamins, bezogen auf noch vorhandene NCO-Gruppen zusetzt und anschließend das restliche Monoamin mit einem Monoisocyanat bindet.

In der DE-OS 2 418 075 wird die Herstellung von thermoplastischen Polyurethan-Elastomeren mit Kettenabbrechern der allgemeinen Strukturformeln R-OH, R'-$NH_2$ oder R'-NH-R", wobei R, R' und R" eine gerade oder verzweigte Kohlenstoffkette mit 1 bis 30 C-Atomen bedeuten, beschrieben.

Die genannten aminofunktionellen Kettenabbrecher besitzen zwar eine Reaktivität vergleichbar dem Kettenverlängerungsmittel Ethylendiamin, sie führen jedoch im Einsatz bei hochkonzentrierten Polyurethanharnstofflösungen nicht zu der gewünschten Löslichkeitsverbesserung.

Es ist ebenfalls Stand der Technik neben dem Kettenverlängerer, zumeist Ethylendiamin, wenige Molprozente eines Co-Kettenverlängerers, z.B. 1,2-Diaminopropan, 1,3-Diaminocyclohexan, Piperazin oder auch Wasser, mitzuverwenden, um durch Störungen des Hartsegmentaufbaus eine bessere Elastomer-Löslichkeit zu erzielen (Houben Weyl, Band E20/Teil 2, S. 1643). Dies führt jedoch zu mehr oder weniger deutlichen Einbußen im thermischen und elastischen Verhalten der daraus hergestellten Elasthanfäden.

Es wird auch versucht, durch eine geringere Härteeinstellung (geringerer Diisocyanatanteil) eine Verbesserung der Löslichkeit zu erzielen. Doch auch hierbei müssen geringere Festigkeiten und schlechtere Thermostabilitäten hingenommen werden.

Aufgabe der Erfindung war somit die Realisierung eines kostensenkenden und auch umweltverträglicheren (lösungsmittelarm und Verbesserung der Wirtschaftlichkeit durch Schnellspinnen) Herstellverfahrens für hochkonzentrierte Elasthanlösungen mit verbesserten rheologischen Fließeigenschaften (Verbesserung der

Spinnfähigkeit durch eine geringere Lösungsviskosität bei Erhalt der nötigen Molekulargewichte) und einer verbesserten Viskositätskonstanz bei langen Lagerzeiten von Elasthanlösungen ohne Einbußen im thermischen und elastischen Verhalten der daraus erhaltenen Endprodukte. Diese Vorteile, wie sie aus der Beschreibung und den Beispielen im einzelnen hervorgehen, konnten durch das erfindungsgemäße Verfahren zur Herstellung bzw. durch entsprechend zusammengesetzte segmentierte Polyurethanharnstoff-Elasthanlösungen, erreicht werden.

Es wurde nun überraschend gefunden, daß sich homogene, hochkonzentrierte, hervorragend viskositätsstabile Spinnlösungen sowohl aus Polyester- oder Polyetherdiolen wie auch insbesondere aus Mischungen von Polyester- und Polyetherdiolen, mit hervorragenden Fließeigenschaften und dadurch besserer Verspinnbarkeit nach einfachen Verfahren herstellen lassen, wenn man als monofunktionelle Kettenabbrecher sterisch anspruchsvolle Kettenabbrecher nach näher spezifizierten Formeln (Monoamine) und/oder gegebenenfalls Monoisocyanate, welche sich aus den primären Aminen der Kettenabbrecher durch Verkappen der Aminogruppen durch die NCO-Gruppe ableiten, einsetzt.

Ebenfalls überraschend war die Tatsache, daß man mit den erfindungsgemäß verwendeten Kettenabbrechern sowohl Spinnlösungen mit einem verbesserten Rohton wie daraus hergestellte Elasthanfäden mit verbesserter Licht- und Schadgasstabilität bei Beibehaltung guter thermischer und elastischer Eigenschaften erhält.

Gegenstand der Erfindung ist somit ein Verfahren zur Herstellung von hochkonzentrierten Elasthanlösungen mit verbesserten rheologischen Fließeigenschaften und hoher Viskositätskonstanz bei langen Standzeiten bei Erhalt des üblichen thermischen und elastischen Eigenschaftsniveaus aus entsprechend hergestellten segmentierten Polyurethanharnstoffen mit bestimmten Monoaminen und/oder Monoisocyanaten als Kettenabbrecher.

Nach der Methode der Erfindung können problemlos hochkonzentrierte Elasthanlösungen auf Basis von Polyurethanharnstoffen mit einem Feststoffanteil bis zu 40 Gew.-% hergestellt werden, die eine hervorragende Löslichkeit und Viskositätskonstanz, auch bei Einstellung einer höheren Härte, d.h. höherer Diisocyanatanteil, und überraschenderweise auch eine Verbesserung des Rohtons der Elasthanlösung aufweisen. Es besteht somit überraschend die Möglichkeit, über die besondere Struktur der erfindungsgemäß eingesetzten Kettenabbrecher sowohl den Rohton und die Löslichkeit der Elasthanlösung als auch Licht- und Schadgasstabilität ersponnener Fäden positiv zu beeinflussen, wobei mit den erfindungsgemäßen Kettenabbrechern/Blockiermitteln jeweils bessere Eigenschaften erzielt werden als bei vergleichbarer Zusammensetzung ohne Kettenabbrecher bzw. Kettenabbrecher bekannter Art, z.B. Diethylamin oder Dibutylamin.

Die Erfindung betrifft somit ein Verfahren zur Herstellung von Lösungen segmentierter Polyurethanharnstoffe in Lösungsmitteln durch Umsetzung von NCO-Prepolymeren, auf Basis von höhermolekularen Dihydroxyverbindungen mit einem Molekulargewicht von 1000 bis 8000 und überschüssigen Mengen an Diisocyanaten mit Ausnahme von 1,4-Cyclohexandiisocyanat, mit Kettenverlängerungsmitteln mit NH-funktionellen Endgruppen, in Gegenwart von monofunktionellen primären und/oder sekundären Aminen als Kettenabbrecher, dadurch gekennzeichnet, daß man als Kettenabbrecher bzw. Blockiermittel primäre und/oder sekundäre Monoamine auf cycloaliphatischer Basis oder sekundäre, cyclische, heterocyclische Monoamine in Mengen von 0,01 bis 10 Äquivalentprozent, bezogen auf vorhandene Äquivalente im NCO-Prepolymer, vorzugsweise 0,5 bis 7 Äquivalentprozent mitverwendet.

Die Erfindung betrifft bevorzugt ein Verfahren der geschilderten Art, dadurch gekennzeichnet, daß als Kettenabbrecher/Blockiermittel g) primäre und/oder sekundäre cyclische Monoamine der allgemeinen Formeln A1-A6

(A1) 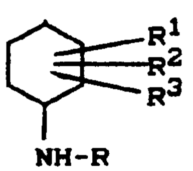 , (A2) 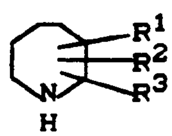 , (A3) 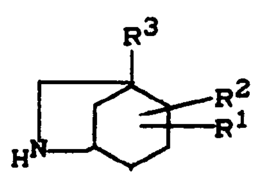 ,

(cycloaliphatische Amine oder heterocyclische Monoamine)

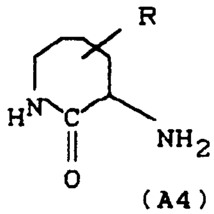
(A4)
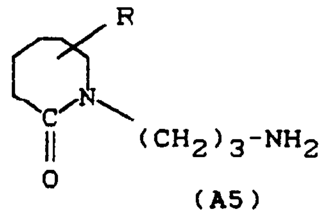
(A5)
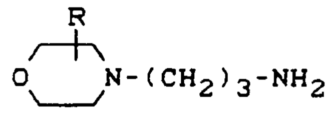
(A6)

bei denen R = H, $C_1$-$C_4$-geradkettiger oder verzweigter Alkylrest oder Cycloalkyl (bevorzugt H, $CH_3$, Cyclohexyl)

$R^1$, $R^2$, $R^3$ = H oder $C_1$-$C_4$-geradkettiger oder verzweigter Alkylrest, jedoch mindestens ein Rest Alkyl ist, wenn nicht R bereits Alkyl oder Cycloalkyl ist,

mindestens ein Rest $R^1$, $R^2$, $R^3$ ein Alkylrest ist, wenn R = H ist, eingesetzt werden.

Als Kettenvarlängerer werden (cyclo)aliphatische Diamine mit einem Anteil von <50% cycloaliphatischer Diamine eingesetzt.

Insbesondere betrifft die Erfindung ein Verfahren nach vorstehender Kennzeichnung, dadurch gekennzeichnet, daß man in erster Stufe ein NCO-Prepolymer aus

a) einer höhermolekularen Dihydroxyverbindung mit Molekulargewichten von 1000 bis 8000, vorzugsweise 1500 bis 4000, z.B. Polyesterdiolen oder Polyetherdiolen oder Mischungen aus Polyester- und Polyetherdiolen, bzw. Copolyetherestern,

b) gegebenenfalls unter Zusatz von niedermolekularen Dihydroxyverbindungen mit Molekulargewichten von 62 bis 399 (z.B. N,N-Bis-(β-hydroxypropyl)-N-methylamin) in Mengen bis höchstens 15 Mol-%, bezogen auf a) und

c) molar überschüssigen Mengen an aromatischen und/oder (cyclo)aliphatischen Diisocyanaten (mit Ausnahme von 1,4-Cyclohexandiisocyanat) oder Mischungen von Diisocyanaten,

d) gegebenenfalls in Gegenwart von Katalysatoren, insbesondere Zinnkatalysatoren (0,002-0,5 Gew.-%).

e) in der Schmelze oder in Lösungsmitteln, vorzugsweise hochpolaren Amidlösungsmitteln wie Dimethylformamid oder inbesondere Dimethylacetamid,

zu einem NCO-Prepolymeren mit einem NCO-Gehalt (bezogen auf Feststoff) von 1,4 bis 4,5 Gew.-%, vorzugsweise 1,8 bis 4,0 Gew.-% umsetzt und

in einer zweiten Stufe dieses NCO-Prepolymer mit

f) Lösungen von (cyclo)aliphatischen Diaminen, insbesondere Alkylendiaminen wie Ethylendiamin, in hochpolaren Amidlösungsmitteln kettenverlängert,

wobei bei der Kettenverlängerungsreaktion

g) die speziellen, monofunktionellen Kettenabbrecher/Blockiermittel auf Basis von Monoaminen der allgemeinen Formeln

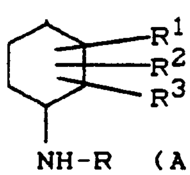
(A1) ,
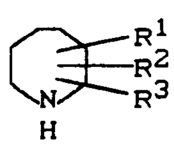
(A2) ,
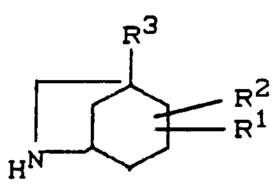
(A3) ,

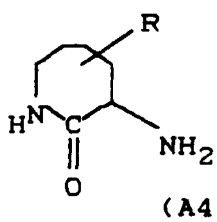
(A4)
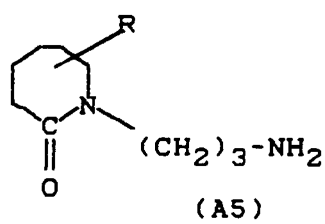
(A5)
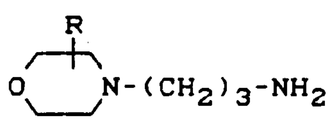
(A6)

wobei für die allgemeinen Formeln die bereits erwähnten Bedingungen gelten,

in Mengen von 0,01 bis 10 Äquivalentprozent, bevorzugt 0,5 bis 7, insbesondere 1,0 - 5 Äquivalentprozent, bezogen auf vorhandene NCO-Äquivalente im NCO-Prepolymeren eingesetzt (die NCO-Äquivalente entsprechen den theoretisch einzusetzenden Amin-Äquivalenten der Kettenverlängerungsmittel) und zu Elastomerlösungen mit einer Konzentration von mindestens 15 Gew.-% Feststoffgehalt, vorzugsweise 20 bis 40 Gew.-% umsetzt.

Beispiele für die Verbindungsklasse (A5) und (A6) sind N-(3-Aminoalkyl)-caprolactame und N-(3-Aminoalkyl)-morpholine, insbesondere N-(3-aminopropyl-morpholin und N-(3-Amonopropyl)-caprolactam.

Bei den Verbindungen nach (A1) sollen mindestens zwei der Reste R, $R^1$-$R^3$ eine (Cyclo)alkylgruppe sein.

Besonders bevorzugt ist ein Verfahren, bei dem 3,3,5-Trimethyl-1-azacycloheptan (TMD-Imin), 1-Amino-3,3,5-trimethyl-cyclohexan, 1-Amino-3-methylcyclohexan, 1-Amino-2-methylcyclohexylamin, α-Amino-caprolactam oder die Verbindung

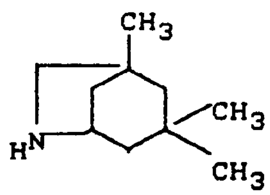

oder die entsprechenden Monoisocyanate der genannten, primären Amine als Kettenabbrecher/Blockiermittel verwendet werden.

Die Elastomerlösungen können, gegebenenfalls nach Zusatz von üblichen Additiven (i), nach üblichen Methoden, insbesondere Trocken- oder Naßspinnverfahren, zu Faden versponnen oder zu Filmen und Folien aufgetrocknet oder koaguliert werden.

Gegenstand der Erfindung sind somit auch Fäden, Folien oder Beschichtungen, bevorzugt Fäden, aus segmentierten Polyurethanharnstoffen entsprechend dem beschriebenen Verfahren, enthaltend Endgruppen der Formel

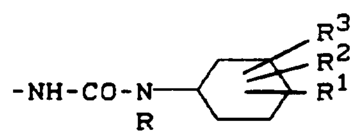

und/oder

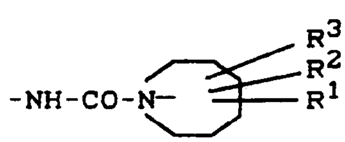

und/oder

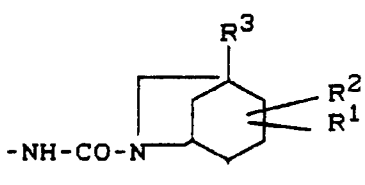

und/oder 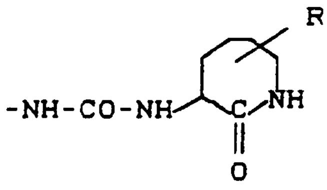 und/oder 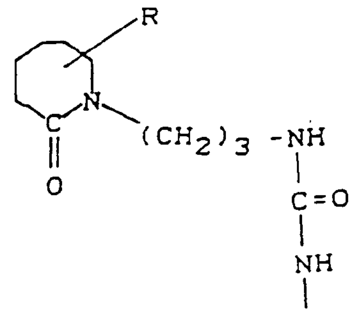 und/oder 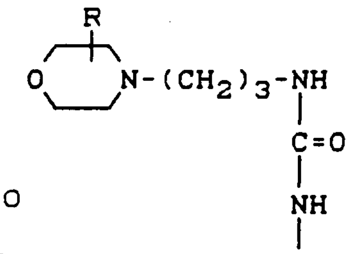

bei denen R = Wasserstoff, eine Alkylgruppe mit 1-4 C-Atomen oder eine Cyclohexylgruppe,
$R^1$, $R^2$, $R^3$ Wasserstoff oder eine $C_1$-$C_4$-geradkettige oder verzweigte Alkylgruppe ist,
aber mindestens eine Alkylgruppe aufweist, wenn die Gruppe R = Wasserstoff ist.

Die erfindungsgemäß aufgebauten, segmentierten Polyurethanharnstoff-Elastomere liefern klare, hinreichend stabile Spinnlösungen, die nach üblichen Naß- und besonders nach dem Trockenspinnverfahren auch bei hoher Feststoffkonzentration (z.B. 30 bis 40 Gew.-%) sehr gut verarbeitet werden können. Die erfindungsgemäß hergestellten, vorzugsweise hochkonzentrierten Spinnlösungen besitzen eine hervorragende Viskositätsstabilität sowohl bei 25°C als auch bei 50°C bei Lagerzeiten (z.B. auch bei hohen Konzentrationen) bis zu mindestens 5 Tagen und länger. Die erfindungsgemäß hergestellten Spinnlösungen zeigen dabei überraschenderweise, zum Teil auch ohne Zusätze von Lichtstabilisatoren, eine deutliche Verbesserung des Rohtons. Überraschenderweise besitzen auch die aus den erfindungsgemäß hergestellten Spinnlösungen erhaltenen Elastomerfäden eine merklich verbesserte Licht- und Schadgasechtheit.

Die Verwendung der speziellen Kettenabbrecher/Blockiermittel ermöglicht das erfindungsgemäße Herstellungsverfahren demnach unter Ausnutzung der Vorteile wie Löslichkeitsverbesserung, Viskositätskonstanz auch bei erhöhter Temperatur und Lagerzeit, Rohtonverbesserung, Verbesserung der Licht- und Schadgasechtheit, die Herstellung verbesserter Elastomerfäden, ohne Einbußen in deren thermischem und mechanischem Eigenschaftsprofil.

Mit den erfindungsgemäßen Kettenverlängerungsmitteln/Blockiermitteln werden dabei unerwartet verbesserte Eigenschaften gegenüber üblichen Blockiermitteln wie Diethylamin oder Dibutylamin erzielt.

Die Herstellung der erfindungsgemäßen Polyurethanharnstoff-Elastomeren kann nach an sich bekannten Verfahrensweisen erfolgen. Besonders bewährt hat sich die Synthese nach NCO-Prepolymer-Verfahren, wobei in der ersten Verfahrensstufe ein höhermolekulares Diol a) im Lösungsmittel oder in der Schmelze mit Diisocyanat c), gegebenenfalls in Gegenwart niedermolekularer Diole b), zu einem NCO-Prepolymer so umgesetzt wird, daß das NCO-Prepolymer NCO-Endgruppen in bestimmter Menge enthält.

Als langkettige, höhermolekulare Dihydroxyverbindungen a) (auch Makrodiole genannt) sind insbesondere Polyesterdiole und Polyetherdiole geeignet. Diese Diole haben im allgemeinen Molekulargewichte von 1.000 bis 8.000, vorzugsweise 1.500 bis 4.000.

Als Polyesterdiole sind z.B. Dicarbonsäurepolyester aliphatischer Dicarbonsäuren geeignet, die sowohl mehrere Diole wie auch mehrere Dicarbonsäuren oder Hydroxycarbonsäuren enthalten können. Besonders geeignet sind Adipinsäure-Mischester aus Adipinsäure, Hexandiol-1,6 und Neopentylglykol, Adipinsäure, Butandiol-1,4 und Neopentylglykol oder Adipinsäure, Butandiol-1,4, Neopentylgkylol und Hexandiol-1,6.

Als langkettige Polyetherdiole eignen sich besonders Polytetramethylenoxiddiole oder ihre Copolyether mit anderen etherbildenden Verbindungen wie Ethylenoxid oder Propylenoxid. Es können auch Mischungen aus den genannten Verbindungen eingesetzt werden.

Weitere höhermolekulare Diolverbindungen, (Makrodiole) z.B. Dihydroxylactonester oder Dihydroxypolycarbonate wie aus dem Stand der Technik bekannt, können ebenfalls eingesetzt werden, ebenso wie weitere, im Stand der Technik bekannte höhermolekulare Diole. Bei der unveröffentlichten, gleichzeitig eingereichten Patentanmeldung Le A 26 254 (P 3 932 949) sind weitere geeignete Makrodiole genannt.

Als niedermolekulare Diole b) sind z.B. Ethylenglykol, Butandiol-1,2, Butandiol-1,4, 1,4- und/oder 1,3-Cyclohexandimethanol, N,N-Bis-(β-hydroxypropyl)-methylamin, N,N'-Bis-(β-hydroxyethyl)-piperazin, N,N-Dimethyl-N',N'-hydroxyethyl-hydrazin und andere Verbindungen dieser Stoffklassen.

Als Diisocyanate c) können die üblichen aromatischen Diisocyanate eingesetzt werden. Sie werden gegebenenfalls in Kombination (mit geringeren Anteilen) von (cyclo)aliphatischen Diisocyanaten, gegebenenfalls aber auch die (cyclo)aliphatischen Diisocyanate allein verwendet. Ausgeschlossen sind hier von den Ansprüchen 1,4-Cyclohexandiisocyanat, in solchen Zusammensetzungen, wie sie in einer getrennten Anmeldung (Le A 25 899 = P 3 932 958) gleichzeitig eingereicht wird. Besonders brauchbare Ergebnisse werden mit nachstehenden Diisocyanaten erhalten:

Mit 2,4-Toluylendiisocyanat sowie entsprechenden Isomerengemischen an 2,4/2,6-Diisocyanat, insbesondere aber mit 4,4'-Diphenylmethan-diisocyanat bzw. entsprechenden Isomerengemischen mit untergeordneten Mengen an 2,4'-und/oder 2,2'-Isomeren. Selbstverständlich ist es möglich, Mischungen von aromatischen Diisocyanaten zu verwenden. Als Mischungskom-ponenten oder Einzelkomponenten sind weiterhin beispielsweise nachstehende (cyclo)aliphatische Diisocyanate geeignet, insbesonders 1,6-Hexamethylendiisocyanat, 1,8-Octamethylendiisocyanat, 2/3-Methylhexamethylendiisocyanat-1,6 oder 2,4-Diisocyanato-1-methyl-cyclohexan sowie die 4,4'-Dicyclohexylmethan-, 4,4'-Dicyclohexylalkyliden-, 4,4'-Dicyclohexyletherdiisocyanate in ihren verschiedenen Stereoisomeren oder Stereoisomergemischen.

Bei der Synthese der segmentierten Elastomeren nach dem NCO-Prepolymerverfahren werden die Makrodiole in der Schmelze oder in einem Lösungsmittel mit überschüssigen molaren Mengen an Diisocyanaten c) über die Diole (a+b) so umgesetzt, daß das Reaktionsprodukt Isocyanatendgruppen enthält. Die OH/NCO-Verhältnisse werden vorzugsweise zwischen 1:1,4 bis 1:4,0, vorzugsweise 1:1,6 bis 1:3,8, gewählt, so daß NCO-Prepolymere mit einem NCO-Gehalt von 1,4 bis etwa 4,5 Gew.-%, vorzugsweise 1,8 bis 4,0 Gew.-%, NCO entstehen. Dabei muß das OH/NCO-Verhältnis in Abhängigkeit vom Molekulargewicht des Makrodiols innerhalb des hier vorgegebenen Verhältnisses so gewählt werden, das der NCO-Gehalt des NCO-Prepolymeren in dem hier bemessenen Bereich fällt.

Als Katalysatoren sind für die NCO-Prepolymerherstellung geeignet: Lewis-Säuren-Katalysatoren wie Zinnsalze oder z.B. Organozinnverbindungen wie Organozinncarboxylate oder -halogenide, Dibutylzinndilaurat, anorganische Salze anorganischer Säuren, z.B. Zinnoctoat, Zinnstearat, Zinnacetat, Bleioctoat, Einschubkatalysatoren wie Organozinnalkoholate, -β-dicarbonylverbindungen, -oxide, -mercaptide, -sulfide, Organoaminzinnverbindungen, -phosphinzinnverbindungen: ferner sind Lewis-Basen-Katalysatoren wie tertiäre Amine, Phosphine, Pyridine als Katalysatoren geeignet, wie sie im Stand der Technik der Polyurethanherstellung im Prinzip bekannt sind. Vorzugsweise werden Dibutylzinndilaurat (Desmorapid® Z/Bayer AG) oder Diazobicyclooctan (DABCO®) eingesetzt. Zumeist wird auf den Einsatz von Katalysatoren verzichtet.

Werden Lösungsmittel bei der Prepolymerisationsreaktion verwendet, so eignen sich hierfür besonders Chlorbenzol, N-Methylpyrrolidon, Dimethylsulfoxid und ganz besonders die zumeist auch als Spinnlösungsmittel benutzten hochpolaren Amid-Lösungsmittel Dimethylformamid und Dimethylacetamid.

Zur Synthese der segmentierten Polyurethanharnstoffe werden die gewünschten Harnstoffgruppen durch eine Kettenverlängerungsreaktion der NCO-Prepolymeren mit Diaminen in die Makromoleküle eingeführt. Die in der NCO-Prepolymerstufe synthetisierten NCO-Prepolymeren (auch Makrodiisocyanate genannt) werden in hochpolaren Lösungsmitteln mit Kettenverlängerungsmitteln f), vorzugsweise aliphatischen Diaminen, und erfindungsgemäßen Kettenabbrechern/Blockiermitteln g) umgesetzt. Dabei wird vorteilhaft durch Auswahl der Kettenverlängerungsmittel Löslichkeit und Kristallisationsfähigkeit sowie Schmelzbereich der Hartsegmente optimal eingestellt.

Bevorzugt werden als Diamine f) geradkettige oder verzweigte Diamine eingesetzt, z.B. 1,2-Propylendiamin, 1,4-Diaminobutan, 1,6-Diaminohexan, 1,3-Diamino-cyclohexan oder auch 1,3-Diamino-2,2-dimethylpropan; bevorzugt wird jedoch Ethylendiamin als alleiniges oder überwiegendes Kettenverlängerungsmittel verwendete

In Anteilen < 50 Mol-% können auch cycloaliphatische Diamine als Co-Kettenverlängerungsmittel verwendet werden, z.B. 1,3-Diamino-cyclohexan.

Es können auch sekundäre Amine wie Piperazin, N-Methylethylendiamin oder N,N'-Dimethyl-ethylendiamin als Codiamine mitverwendet werden, jedoch ist dies weniger bevorzugt.

Die Kettenverlängerungsreaktion erfolgt bevorzugt in Lösung unter Verwendung hochpolarer Lösungsmittel wie Dimethylsulfoxid, N-Methylpyrrolidon, vorzugsweise jedoch Dimethylformamid oder insbesondere Dimethylacetamid.

Die für den bevorzugten Trockenspinnprozeß notwendige Viskosität der Elastomerlösung liegt im allgemeinen im Bereich von 30 bis 350 Pa.s bei 20°C, wobei die Konzentration der Spinnlösung zwischen 18 und 34 Gew.-% betragen kann. Die nach dem erfindungsgemäß beschriebenen Verfahren hergestellten Elastomerlösungen können Feststoffkonzentrationen bis zu 40 % und mehr aufweisen, wobei die Viskosität der Elastomerlösung im Bereich von 100 bis 250 Pa.s bei 50°C beträgt.

Im Trockenspinnprozeß können die - gegebenenfalls bis ca. 120°C erwärmten - Spinnlösungen mit Viskositäten von mindestens 30 Pa.s bei 20°C durch Düsen in einen auf etwa 150 bis 250°C beheizten, etwa 4 bis 8 m langen Spinnschacht, in den auf etwa 150 bis 350°C beheizte Luft oder Inertgase wie Stickstoff oder Dampf eingeblasen werden, versponnen werden.

Die erfindungsgemäß hergestellten Lösungen besitzen eine Stabilität vor Verpastung von mindestens 5

Tagen, vorzugsweise mindestens 7 Tagen und sind gegenüber Abbrecher-freien oder gleichartige Mengen an bisher üblichen Abbrechern, z.B. Diethylamin, enthaltenden Polymeren in Lösung deutlich günstiger.

Durch Verwendung einer geringen Menge an erfindungsgemäßen monofunktionellen Kettenabbrechern während der Kettenverlängerungsreaktion, läßt sich das gewünschte Molekulargewicht problemlos einstellen.

Völlig überraschend wurde dabei gefunden, daß - im Gegensatz zu den Monoaminen (wie z.B. Diethylamin oder Dibutylamin) des Standes der Technik cyclische Monoamine entsprechend den Formeln A1) bis A6) (siehe Gegenstand der Erfindung und Ansprüche) Elastomerlösungen mit drastisch verbesserter Löslichkeit (verringerter Verpastungstendenz) entstehen und derartige Spinnlösungen über eine lange Zeit technisch verarbeitbar sind. Unter den genannten bevorzugten Kettenabbrechern/Blockiermitteln sind insbesondere zu nennen Monoamine wie Dicyclohexylamin, N-Methyl-cyclohexylamin, 1-Amino-2-methyl-cyclohexan, 1-Amino-3,5-dimethylcyclohexan, 1-Amino-3,3,5-trimethylcyclohexan, 1-Amino-3-methylcyclohexan, 1-Amino-3-ethylcyclohexan, 1-Amino-3-isopropyl-cyclohexan, 1-Amino-4-methylcyclohexan (weniger bevorzugt), 3,3,5-Trimethyl-1-azacycloheptan, (TMD-Imin), oder α-Amino-caprolactam.

Die Verbindungen vom Typ (A6) ergeben gleichzeitig einen Einbau von tert.-Aminogruppen im Elasthanmolekül, was zu erhöhter Anfärbbarkeit führt.

Als Monoisocyanat-Kettenabbrecher B) können beispielsweise verwendet werden: 1-Isocyanato-2-methyl-cyclohexan, 1-Isocyanato-3,5-dimethyl-cyclohexan, 1-Isocyanato-3,3,5-trimethyl-cyclohexan, 1-Isocyanato-3-methyl-cyclohexan oder 1-Isocyanato-3-isopropyl-cyclohexan.

Als cyclische Verbindung können auch mehrkernige, heterocyclische Monoamino-Verbindungen verwendet werden wie

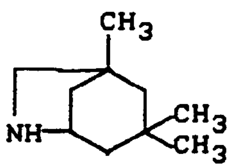 .

Die Monoamin-Kettenabbrecher können dabei vorzugsweise im Gemisch mit dem Diamin-Kettenverlängerungsmittel verwendet werden. Sie können aber auch vorher (mit den NCO-Prepolymeren) eingesetzt werden.

Die geschilderten Varianten können auch kombiniert werden.

Den erfindungsgemäß hergestellten Elastomerlösungen können auch die für verschiedenste Zwecke dienenden üblichen Additive i) in wirksamen Mengen zugesetzt werden. Genannt seien z.B. Antioxidantien, Lichtschutzmittel, UV-Absorber, Schönungsfarbstoffe, Pigmente, Färbeadditive (z.B. tertiär Amin-haltige Oligomere oder Polymere), Antistatika, abhäsiv wirksame Zusätze wie Magnesium-, Calcium-, Lithium-, Zink- und Aluminiumsalze langkettiger Carbonsäuren wie -stearate, -palmitate oder Dimerfettsäuren oder beliebige Gemische dieser Salze oder auch Zusätze von feinteiligen Zinkoxiden, welche bis zu 15 Gew.-% andere Oxide, z.B. Magnesiumoxid oder Calciumoxid oder Carbonate, z.B. Ca- oder Magnesiumcarbonate, enthalten können. Durch derartige Zinkoxide mit Erdalkalioxiden oder -Carbonaten als Zusätze kann eine hervorragende Chlorbeständigkeit von Ether- wie auch Polyester-Elastomerfäden gegen Chlorwasser (Waschmittel/Schwimmbäder/Bleichmittel) erzielt werden, ohne das man eine hohe Reinheitsforderung, z.B. im Zinkoxid- oder Spuren-Schwefel-Gehalt, einhalten müßte.

Die nach dem erfindungsgemäßen Verfahren erhaltenen Elastomerlösungen können nach den angegebenen Verfahren zu Elastomerfäden versponnen, jedoch auch zu Folienbeschichtungen oder ähnlichen Flächengebilden verarbeitet werden. Dies kann durch Auftrocknen oder durch Koagulation geschehen.

Die erfindungsgemäßen Elastomerlösungen zeigen eine ungewöhnliche Kombination von hervorragender Löslichkeit und Viskositätskonstanz, selbst bei hoher Temperatur und langen Lagerzeiten, und hervorragender Lichtstabilität, die sich in einem verbesserten Rohton der Spinnlösung und einer verbesserten Licht- und Schadgasechtheit der daraus erhaltenen Fäden äußert.

Meßmethoden:

Die in den Beispielen erwähnten Meßgrößen wurden wie folgt bestimmt: Die inhärente Viskosität ($\eta i$) der Elastomeren wurde in verdünnter Lösung von 0,5 g/100 ml Dimethylacetamid bei 30°C durch Bestimmung der relativen Visko-sität $\eta_r$ gegenüber dem reinen Lösungsmittel bestimmt und nach der Formel

$$\eta_R = \frac{t_1}{t_0}$$

$t_1$: Durchlaufzeit (sec) der Polymerlösung
$t_0$: Durchlaufzeit (sec) des reinen Lösungsmittels

$$\eta_i = \frac{\ln \eta_r}{c}$$

umgerechnet.

Die Feinheitsfestigkeit wurde in Anlehnung an DIN 53 815 bestimmt (cN/dtex). Die Höchstzugkraftdehnung (in %) erfolgte ebenfalls nach DIN 53 815. Der Modul bei 100 % bzw. 300 % erstmaliger Dehnung wurde bei einer Dehnungsgeschwindigkeit von 4 x $10^{-3}$ Meter pro Sekunde in cN/dtex bestimmt. Die Restdehnung wurde nach fünfmaliger Ausdehnung auf 300 % und nach einer Erholungszeit von 60 Sekunden bestimmt. Die Messung von heat distortion Temperatur (HDT), Heißreißzeit (HRZ) bzw. Heißwasserspannungsabfall (HWSA) erfolgt nach Methoden, die in Chemiefasern/Textilindustrie, Januar 1978, Heft 1/78, 28.180. Jahrgang auf Seite 44-49 beschrieben sind. Entsprechende Angaben finden sich auch in DE-OS 25 42 500 (1975).

Die Untersuchung der Lichtechtheit erfolgte nach einer Belichtungszeit von 300 Stunden im Xeno-Test 150 (DIN 54 004).

Die Untersuchung der Abgasechtheit erfolgte durch den Stickstoffoxidechtheits-Test nach DIN 54 025 (leichte Behandlung 1 x, schwere Behandlung 3 x).

Beispiel 1 (Vergleich zu Beispiel 2a und b)

Eine Mischung aus 2100 g eines Polyesterdiols vom Molekulargewicht 3404 auf Basis von Adipinsäure, Hexandiol-1,6, Butandiol-1,4 und Neopentylglykol (Molverhältnis 48 : 33 : 9 : 10) und 900 g eines Polyetherdiols auf Basis von Polytetramethylenoxid (Molekulargewicht 2000 = Terathane® 2000, Fa. DuPont, Wilmington, Del., USA) werden mit 1497 g wasserfreiem Dimethylacetamid gemischt und mit 492 g Diphenylmethan-4,4'-diisocyanat (Desmoduro®44/Bayer AG) versetzt. Anschließend wurde 75 Minuten auf 50°C erwärmt, bis der NCO-Gehalt des NCO-Prepolymeen 2,21 Gew.-% (bezogen auf Prepolymer-Feststoff) betrug.

Eine Mischung aus 32,8 g Ethylendiamin und 3,3 g Diethylamin (DEA) in 4084 g Dimethylacetamid wurde hergestellt und mit 70 g $CO_2$ versetzt. Zu dieser Carbamatsuspension wurden unter intensivem Rühren 3104 g der NCO-Prepolymerlösung innerhalb von 15 Minuten zugesetzt. Man erhält eine klare, homogene Elastomerlösung mit einem Elastomerfeststoffgehalt von 30 % und eine Lösungsviskosität von 218,8 Pa.s/50°C. Die inhärente Viskosität betrug 1,19 dl/g (5 g Elastomer-Feststoff pro Liter Dimethylacetamid bei 30°C). Zu der viskosen Elastomerlösung wurden, bezogen auf PUH-Feststoff, 0,3 Gew.-% Mg-Stearat, 1 % Polyethersiloxane Silwet® L 7607 (ein Polyether/Polydimethylsiloxan-Copolymer, Lieferfirma Union Carbide), 1 % Cyanox® 1790 (American Cyanamide, USA), 0,5 % Tinuvin® 622 (Ciba Geigy), 2 % $TiO_2$ (Rutil KB-3, Bayer AG), 7 ppm Makrolex®-Violett B (Bayer AG) sowie 4 % eines Färbeadditives, das durch Umsetzung von N-Methyl-diisopropanolamin mit 4,4'-Dicyclohexylmethan-diisocyanat im Verhältnis 1:0,99 hergestellt wurde, zugesetzt.

Die Verspinnung der Lösung erfolgte nach dem Trockenspinnverfahren über eine 12-Loch-Düse mit Bohrungen von je 0,3 mm Durchmesser. Schachtheiztemp. 220°C, Lufttemp. 270°C, Abzugsgeschw. 400 m/min unter Verwendung eines Luftdrallgebers. Die textilen Daten sind in Tabelle 1 und das Langzeitviskositätsverhalten ist in Tabelle 2 zusammengefaßt.

Beispiel 2

Eine Mischung aus 2100 g eines Polyesterdiols, wie in Beispiel 1 beschrieben, und 900 g Terathane® 2000 wurden mit 1497 g Dimethylacetamid gemischt und mit 492 g Diphenylmethan-4,4'-diisocyanat versetzt. Anschließend wurde 75 Min. auf 50°C erwärmt, bis der NCO-Gehalt des NCO-Prepolymeren 2,1 Gew.-% betrug. Diese Prepolymerlösung wurde für zwei Kettenverlängerungen aufgeteilt.

Beispiel 2a

Eine Mischung aus 21,6 g Ethylendiamin und 3,4 g N-Methylcyclohexylamin (MCHA) in 2725 g Dimethylacetamid wurde hergestellt und mit 50 g $CO_2$ versetzt. Zu dieser Carbamatsuspension wurden 2074 g der NCO-Prepolymerlösung innerhalb von 15 Min. zugesetzt. Man erhielt eine klare, homogene Elastomerlösung mit einem Elastomerfeststoff von 30 % und einer Lösungsviskosität von 238 Pa.s (50°C). Die inhärente Viskosität betrug 1,21 dl/g.

Beispiel 2b

Eine Mischung aus 21,6 g Ethylendiamin und 5,4 g Dicyclohexylamin (DCHA) in 2730 g Dimethylacetamid wurde hergestellt und mit 50 g $CO_2$ versetzt. Zu dieser Carbamatsuspension wurden 2113 g der NCO-Prepolymerlösung zugesetzt. Man erhielt eine klare, homogene Elastomerlösung mit einem Feststoff von 30 % und einer Lösungsviskosität von 127 Pa.s (50°C). Die inhärente Viskosität betrug 1,21 dl/g.

Zu den viskosen Elastomerlösungen aus den Beispielen 2a und 2b wurden, bezogen auf PUH-Feststoff, 0,3 Gew.-% Mg-Stearat, 1 % Silwet® L 7607, 1 % Cyanox® 1790, 0,5 % Tinuvin® 622, 2 % $TiO_2$, 7 ppm Makrolex®-Violett B sowie 4 % eines Färbeadditivs, wie im Beispiel 1 beschrieben, zugesetzt.

Die Trockenverspinnung erfolgte unter den im Beispiel 1 aufgeführten Bedingungen. Die textilen Daten sind in Tabelle 1 und das Langzeitviskositätsverhalten ist in Tabelle 2 zusammengefaßt.

Wie aus der Tabelle 1 zu entnehmen ist, haben die erfindungsgemäßen Kettenabbrecher MCHA und DCHA keinen negativen Einfluß auf die textilen Daten der Elasthanfäden. Aus Tabelle 2 dagegen wird deutlich, daß die erfindungsgemäßen Kettenabbrecher MCHA und DCHA gegenüber DEA (Diethylamin 1t. Stand der Technik) hervorragend stabilere Elastomerlösungen über einen Zeitraum von mindestens 5 Tagen liefern.

Beispiel 3 (Vergleich zu Beispiel 4a und b)

Eine Mischung aus 910 g eines Polyesterdiols (MG 3313), wie im Beispiel 1 beschrieben, und 390 g Terethane® 2000 wurden mit 650 g Dimethylacetamid gemischt und mit 217 g Diphenylmethan-4,4'-diisocyanat versetzt. Anschließend wurde 60 Min. auf 50°C erwärmt, bis der NCO-Gehalt des NCO-Prepolymeren 1,92 % betrug.

Eine Mischung aus 18,84 g Ethylendiamin und 1,9 g Diethylamin (DEA) in 2582 g Dimethylacetamid wurde hergestellt und mit 40 g $CO_2$ versetzt. Zu dieser Carbamatsuspension wurden 1919 g der NCO-Prepolymerlösung zugesetzt. Man erhält eine klare, homogene Elastomerlösung mit einem Elastomerfeststoffgehalt von 30 % und eine Lösungsviskosität von 119 Pa.s (50°C). Die inhärente Viskosität betrug 1,11 dl/g. Zu der viskosen Elastomerlösung wurden, bezogen auf PUH-Feststoff, 0,3 % Mg-Stearat, 1 % Silwet® L 7607, 1 % Cyanox® 1790 und 4 % eines wie im Beispiel 1 beschriebenen Färbeadditivs zugesetzt. Die Trockenverspinnung erfolgte wie in Beispiel 1 beschrieben. In Tabelle 1 sind die textilen Daten und in Tabelle 3 das Langzeitviskositätsverhalten bei 25°C und 50°C zusammengefaßt.

Beispiel 4

Eine Mischung aus 1820 g eines Polyesterdiols (MG 3313), wie im Beispiel 1 beschrieben, und 780 g Terathane® 2000 wurden mit 1300 g Dimethylacetamid gemischt und mit 433 g Diphenylmethan-4,4'-diisocyanat versetzt. Anschließend wurde 60 min auf 50°C erwärmt, bis der NCO-Gehalt des NCO-Prepolymeren 1,97 % betrug.

Diese Prepolymerlösung wurde für zwei Kettenverlängerungen aufgeteilt.

Beispiel 4a

Eine Mischung aus 19,3 g Ethylendiamin und 3,8 g

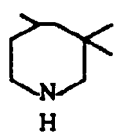

(TMD-Imin)

in 2587 g Dimethylacetamid wurde hergestellt und mit 45 g $CO_2$ versetzt. Zu dieser Carbamatsuspension wurden 1917 g der NCO-Prepolymerlösung zugesetzt. Man erhielt eine klare, homogene Elastomerlösung mit einem Elastomerfeststoff von 30 % und eine Lösungsviskosität von 110 Pa.s (50°C). Die inhärente Viskosität betrug 1,08 dl/g.

Beispiel 4b

Eine Mischung aus 19,3 g Ethylendiamin und 4,1 g

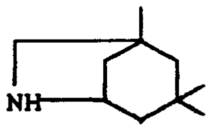

(IPD-Imin)

in 2587 g Dimethylacetamid wurde hergestellt und mit 45 g $CO_2$ versetzt. Zu dieser Carbamatsuspension wurden 1917 g der NCO-Prepolymerlösung zugesetzt. Man erhielt eine klare, homogene Elastomerlösung mit einem Elastomerfeststoff von 30 % und eine Lösungsviskosität von 244 Pa.s (50°C). Die inhärente Viskosität betrug 1,14 dl/g.

Zu den viskosen Elastomerlösungen aus den Beispielen 4a und b wurden, bezogen auf PUH-Feststoff, 0,3 % Mg-Stearat, 1 % Silwet® L 7607, 1 % Cyanox® 1790 und 4 % eines wie im Beispiel 1 beschriebenen Färbeadditivs zugesetzt.

Die Trockenverspinnung erfolgte wie im Beispiel 1 beschrieben. In Tabelle 1 sind die textilen Daten und in Tabelle 3 das Langzeitviskositätsverhalten bei 25°C und 50°C zusammengefaßt.

Wie aus Tabelle 1 zu entnehmen ist, haben die erfindungsgemäßen Kettenabbrecher TMD- und IPD-Imin keinen negativen Einfluß auf die textilen Daten der Elasthanfäden. Aus Tabelle 3 geht dagegen hervor, daß die erfindungsgemäßen Kettenabbrecher gegenüber DEA in der Löslichkeit und dem Viskositätsverhalten bei langen Standzeiten und erhöhter Temperatur enorme Vorteile haben. So führt der Einsatz von TMD-Imin zu sehr hohen Viskositätskonstanz, während der Einsatz von IPD-Imin sogar zu einem wünschenswert geringen Lösungsviskositätsabbau führt, ohne das sich die inhärente Viskosität des PUH-Feststoffs dabei merklich geändert hat.

**Tabelle 1:** Variation der Kettenabbrecher - textile Daten -

| Bsp. | Feststoff der Spinnlösung | Kettenabbrecher | Titer (dtex) | FF (cN/dtex) | FF-ist (cN/dtex) | HZKD (%) | ε (%) | R 100 (cN/dtex) | R300 (cN/dtex) | HDT (°C) | HRZ (sec) | ηi |
|---|---|---|---|---|---|---|---|---|---|---|---|---|
| 1 (Vgl.) | 30 %ig | 4 % DEA | 157 | 0,97 | 6,48 | 569 | 17 | 0,043 | 0,130 | 171 | 26 | 1,19 |
| 2a | 30 %ig | 4 % MCHA | 158 | 1,02 | 6,54 | 538 | 15 | 0,048 | 0,153 | 173 | 25 | 1,21 |
| 2b | 30 %ig | 4 % DCHA | 150 | 1,19 | 7,43 | 527 | 14 | 0,046 | 0,160 | 173 | 26 | 1,21 |
| 3 (Vgl.) | 30 %ig | 4 % DEA | 160 | 1,03 | 6,69 | 550 | 14 | 0,045 | 0,138 | 167 | 20 | 1,11 |
| 4a | 30 %ig | 4 % TMD | 159 | 1,05 | 6,79 | 546 | 15 | 0,043 | 0,137 | 165 | 18 | 1,08 |
| 4b | 30 %ig | 4 % IPD | 157 | 1,05 | 6,69 | 538 | 14 | 0,047 | 0,150 | 165 | 19 | 1,14 |
| 5 (Vgl.) | 34 %ig | 3 % DEA | 154 | 0,85 | 4,56 | 432 | 22 | 0,060 | 0,249 | 182 | 36 | 1,14 |
| 6 | 40 %ig | 5 % DCHA | 142 | 0,82 | 4,62 | 466 | 23 | 0,062 | 0,200 | 181 | 27 | 1,20 |

FF: Feinheitsfestigkeit
FF-ist: Feinheitsfestigkeit bezogen auf Ausgangstiter
HZKD: Höchstzugkraftdehnung (Bruchdehnung)
ε: Restdehnung nach fünfmaliger Dehnung bis 300 %
R100/R300: Kraftaufnahme bei 100 bzw. 300 % Dehnung
HRZ: Heißreißzeit; Zeit, bei der der Faden mit definierter Dehnung bei 200°C reißt
HDT: heat distortion temperature; Temperatur, bei der der Faden mit definierter Belastung reißt
ηi: η inhärent

**Tabelle 2:** Standzeitverhalten der Elastomerlösungen aus den Beispielen 1, 2a, b bei 25° C

| Beispiel | Kettenabbrecher (4 %) | Lösungsviskositäten [Pa.s (50° C)] 1. | 2. | 3. | 5. Tag | $\Delta_\eta$ |
|---|---|---|---|---|---|---|
| 1 | DEA | 186 | n.b. | 235 | 238 | + 30 % |
| 2a | MCHA | 238 | 258 | n.b. | 246 | + 3,4 % |
| 2b | DCHA | 127 | 133 | n.b. | 139 | + 9,5 % |

$\Delta_\eta$: Gesamtänderung der Lösungsviskosität in Prozent gegenüber der Ausgangsviskosität

n.b.: nicht bestimmt

**Tabelle 3:** Standzeitverhalten der Elastomerlösungen aus den Beispielen 3, 4a, b bei 25° C und 50° C

| Beispiel | Kettenabbrecher (4 %) | Lagertemp. | Lösungsviskosität [Pa.sec (50° C)] 1. | 2. | 3. | 8. | 10. Tag | Δη |
|---|---|---|---|---|---|---|---|---|
| 3 | DEA | 25° C | 119,4 | 148,6 | 147,1 | 177,8 | 166,6 | + 40 % |
| | | 50° C | 119,4 | - | 122,4 | 136,9 | 142,4 | + 19 % |
| 4a | TMD-Imin | 25° C | 110 | 110,7 | 117,9 | 119,4 | 117,4 | + 7 % |
| | | 50° C | 110 | - | - | 119,2 | 109,2 | 0 % |
| 4b | IPD-Imin | 25° C | 244 | 160 | - | 142,7 | 139,8 | -43 % |
| | | 50° C | 244 | - | - | 176,2 | 168,9 | -31 % |

Beispiel 5 (Vergleich zu Beispiel 6)

4000 g eines Polyesters auf Basis von Adipinsäure, Hexandiol-1,6 und Neopentylglykol (MG 2022) wurde mit 1229 g Dimethylacetamid gemischt und mit 915 g Diphenylmethan-4,4'-diisocyanat versetzt. Anschließend

wurde 40 Min. auf 50°C erwärmt, bis der NCO-Gehalt des NCO-Prepolymeren 2,60 % betrug.

Eine Mischung aus 38,7 g Ethylendiamin und 2,9 g Diethylamin (DEA) in 3292 g Dimethylacetamid wurde hergestellt und mit 80 g $CO_2$ versetzt. Zu dieser Carbamatsuspension wurden 2522 g der NCO-Prepolymerlösung zugesetzt. Man erhält eine klare, homogene Elastomerlösung mit einem Elastomerfeststoffgehalt von 35 % und eine Lösungsviskosität von 213 Pa.s (50°C). Die inhärente Viskosität betrug 1,14 dl/g.

Zu der viskosen Elastomerlösung wurden, bezogen auf PUH-Feststoff, 1 % Cyanox® 1790, 0,5 % Tinuvin® 622, 0,4 % Mg-Stearat und 1 % Silwet® L 7607 gegeben.

Die Verspinnung der Lösung erfolgte nach dem Trockenspinnverfahren, wie im Beispiel 1 beschrieben. Die textilen Daten sind in Tabelle 1 zusammengefaßt.

Die im Beispiel 5 hergestellte Lösung war jedoch bei einer Lagertemperatur von 50°C bereits am dritten Tag verpastet, während bei 25°C die Lösungsviskosität am vierten Tag bereits 300 Pa.s (50°C) betrug.

## Beispiel 6

4000 g eines Polyesters, wie im Beispiel 5 beschrieben, wurde mit 1229 g Dimethylacetamid gemischt und mit 915 g Diphenylmethan-4,4'-diisocyanat versetzt. Anschließend wurde 40 Min. auf 50°C erwärmt, bis der NCO-Gehalt des NCO-Prepolymeren 2,62 % betrug.

Eine Mischung aus 38,3 g Ethylendiamin und 12,1 g Dicyclohexylamin in 2576 g Dimethylacetamid wurde hergestellt und mit 80 g $CO_2$ versetzt. Zu dieser Carbamatsuspension wurden 2500 g der NCO-Prepolymerlösung zugesetzt. Man erhält eine klare, homogene Elastomerlösung mit einem Elastomerfeststoff von 40 % und eine Lösungsviskosität von 169 Pa.s (50°C). Die inhärente Viskosität betrug 1,20 dl/g.

Zu dieser viskosen Elastomerlösung wurden, bezogen auf PUH-Feststoff, 1 % Cyanox® 1790, 0,5 % Tinuvin® 622, 0,4 % Mg-Stearat, 1 % Silwet® L 7607 gegeben.

Die Trockenverspinnung erfolgte wie im Beispiel 1 beschrieben.

Die textilen Daten können der Tabelle 1 entnommen werden. Wie man sieht, erhält man Elasthanfäden mit guten textilen Eigenschaften.

Die hier beschriebene Elastomerlösung war 5 Tage stabile Es wurde versucht, eine entsprechende Elastomerlösung mit Diethylamin herzustellen. Dies war jedoch nicht möglich. Die Elastomerlösung verpastete kurz nach der Herstellung und konnte nicht versponnen werden.

## Beispiel 7

Eine Mischung aus 350 g eines Polyesterdiols, wie im Beispiel 1 beschrieben, und 150 g Terethane® 2000 wurden mit 250 g Dimethylacetamid gemischt und mit 83,3 g Diphenylmethan-4,4'-diisocyanat versetzt. Anschließend wurde 60 Min. auf 50°C erwärmt, bis der NCO-Gehalt des NCO-Prepolymeren 2,05 % betrug.

Diese Prepolymerlösung wurde für mehrere Kettenverlängerungen aufgeteilt.

Die Herstellangaben für die Kettenverlängerungen sind in Tabelle 4 zusammengestellt.

Zu den Elastomerlösungen wurden keine Spinnzusätze und Lichtstabilisatoren gegeben.

In Tabelle 5 ist das Viskositätsverhalten der fünf Elastomerlösungen bei 25°C über 7 Tage dargestellt. Aus der Abbildung wird der überragende Vorteil der erfindungsgemäßen Kettenabbrecher gegenüber Diethylamin und 2-Methyl-piperidin (2MP) deutlich. Außerdem waren die Elastomerlösungen mit den erfindungsgemäßen Kettenabbrechern, obwohl keine Lichtstabilisatoren verwendet wurden, nach 7 Tagen klar und farblos, während die DEA-bzw. 2MP-Elastomerlösungen stark gelb gefärbt und trübe waren.

Tabelle 4: Herstellung von Elastomerlösungen mit Feststoffgehalt von 30 % - Beispiel 7

| Beispiel | Kettenabbrecher | | EDA | DMAC | $CO_2$ | NCO-Prepolymer-Lösung | Lösungsviskosität (bei 50° C) | ηi (dl/g) |
|---|---|---|---|---|---|---|---|---|
| 7a (Vgl.) | DEA | 0,107 g | 1,06 g | 136 g | 4 g | 100 g | 137 Pa.s | 1,13 |
| 7b | 3-A-1MCH | 0,17 g | 1,06 g | 136 g | 4 g | 100 g | 106 Pa.s | 1,01 |
| 7c | 2-A-1MCH | 0,17 g | 1,06 g | 136 g | 4 g | 100 g | 86,5 Pa.s | 1,08 |
| 7d | 5-A-TMCH | 0,21 g | 1,06 g | 136 g | 4 g | 100 g | 79,2 Pa.s | 1,03 |
| 7e (Vgl.) | 2-M-P | 0,15 g | 1,06 g | 136 g | 4 g | 100 g | 125 Pa.s | 1,21 |

EDA : Ethylendiamin
DMAC : Dimethylacetamid
$CO_2$ : $CO_2$-Menge
ηi : η inhärent (bestimmt in 1 %iger Lösung in DMA bei 25° C)
DEA : Diethylamin
3-A-1MCH : 1-Amino-3-methylcyclohexan
2-A-1MCH : 1-Amino-2-methylcyclohexan
5-A-TMCH : 1-Amino-3,3,5-trimethylcyclohexan
2-M-P : 2-Methylpiperidin

**Tabelle 5:** Beispiel 7

Viskositätsverhalten (bei 25°C) 30 %iger Elastomerlösungen - Beispiel 7a-d

| Beispiel | Viskosität gemessen $\eta_{D6}$ bei 50°C in Pa.s | | | | |
|---|---|---|---|---|---|
| | bei Herstellung | nach 7 Tagen | $\Delta\eta$ | Kettenabbrecher | Rohton der Elastomerlösung nach 7 Tagen |
| 7a | 137 | 162 | +18 % | (Vergleichsversuch mit Diethylamin) | stark gelb |
| 7b | 106 | 106 | 0 % | 1-Amino-3-methyl-cyclohexan | farblos |
| 7c | 86,5 | 94 | + 8 % | 1-Amino-2-methyl-cyclohexan | farblos |
| 7d | 79,2 | 86 | + 7,5 % | 1-Amino-3,3,5-trimethylcyclohexan | farblos |
| 7e | 125 | 212 | + 70 % | (Vergleichsversuch mit 2-Methylpiperidin) | stark gelb |

$\Delta\eta$: Gesamtänderung der Lösungsviskosität in Prozent gegenüber der Ausgangsviskosität

**Beispiel 8**

**Tabelle 6:** NCO-Prepolymerherstellung zur Herstellung der Elastomerlösungen in Tabelle 7

| Polyesterdiol (wie im Beispiel 1 beschrieben) | Terathane® 2000 | DMAc | Diphenylmethan-4,4'-diisocyanat | Reaktionszeit bei 50°C | NCO-Gehalt (bezogen auf Prepolymerfeststoff) | für Beispiel |
|---|---|---|---|---|---|---|
| 2356 g | 1010 g | 1682 g | 561 g | 60 Min. | 2,03 % | 8a |
| 2356 g | 1010 g | 1682 g | 561 g | 60 Min. | 2,07 % | 8b,c |
| 2356 g | 1010 g | 1682 g | 561 g | 60 Min. | 2,10 % | 8d,e |
| 2356 g | 1010 g | 1682 g | 561 g | 60 Min. | 2,11 % | 8f |

Die entsprechenden Kettenverlängerungen dieser Prepolymerlösungen sind in Tabelle 7 zusammengefaßt.

**Beispiel 8 (Kettenverlängerung)**

**Tabelle 7:** Herstellung von Elastomerlösungen mit Feststoffgehalt von 35 %

| Beispiel | Kettenabbrecher | | [Äq%] | EDA | DMAc | $CO_2$ | NCO-Prepolymerlsg. | Lösungsvisk. (bei 50°C) 1. Tag | ηi (dl/g) | Lösungsvisk. (bei 50°C) | Δη |
|---|---|---|---|---|---|---|---|---|---|---|---|
| 8a (Vgl.) | DEA | 4,45 g | 7 % | 24,3 g | 2454 g | 60 g | 2400 g | 431 Pa.s (verpastet kurz nach der Herst.) | 1,28 | verpastet | ∞ |
| 8b | TMD-Imin | 5,0 g | 4 % | 25,6 g | 2457 g | 60 g | 2400 g | 291 Pa.s | 1,05 | 374 Pa.s | +29 % |
| 8c | 2-A-1MCH | 4,02 g | 4 % | 25,6 g | 2455 g | 60 g | 2420 g | 200 Pa.s | 1,02 | 235 Pa.s | +18 % |
| 8d | 5-A-TMCH | 5,1 g | 4 % | 26 g | 2457 g | 60 g | 2420 g | 196 Pa.s | 0,98 | 244 Pa.s | +25 % |
| 8e | 3-A-1MCH | 5,1 g | 5 % | 25,7 g | 2457 g | 60 g | 2410 g | 160 Pa.s | 0,96 | 209 Pa.s | +31 % |
| 8f | TMD-Imin | 7,7 g | 6 % | 25,6 g | 2461 g | 60 g | 2420 g | 150 Pa.s | 0,94 | 170 Pa.s | +13 % |

[Äq%]: Äquivalentprozente des Kettenabbrechers bezogen auf vorhandene NCO-Äquivalente im NCO-Prepolymer.

Δη: Gesamtänderung der Lösungsviskosität in Prozent gegenüber der Ausgangsviskosität

Zu Beispiel 8

Zu den entsprechenden Elastomerlösungen wurden, bezogen auf PUH-Feststoff, 1 % Cyanox® 1790, 0,4 % Mg-Stearat, 1 % Siiwet® L 7607 und 4 % eines im Beispiel 1 beschriebenen Färbeadditivs zugesetzt.

Die Elastomerlösungen mit den erfindungsmäßigen Kettenabbrechern konnten problemlos nach dem im Beispiel 1 beschriebenen Trockenspinnverfahren zu Elasthanfäden mit guten textilen Eigenschaften versponnen werden. Die Elastomerlösung mit Diethylamin (Vergleichsbeispiel 8a) konnte wegen Verpastung nicht versponnen werden. Dagegen sind die erfindungsgemäßen Lösungen über 12 Tage Meßzeit praktisch gut fließend und stabil geblieben.

**Beispiel 9** (Vergleich)

**Tabelle 8**: NCO-Prepolymerherstellung zur Herstellung der Elastomerlösungen in Tabelle 9

| Polyesterdiol (wie im Beispiel 1 beschrieben) | Terathane®2000 | DMAc | Diphenylmethan-4,4'-diisocyanat | Reaktionszeit bei 50°C | NCO-Gehalt (bezogen auf Prepolymer-feststoff) | für Beispiel |
|---|---|---|---|---|---|---|
| 280 g | 120 g | 200 g | 66,6 g | 60 min | 1,87 % | 9 |

**Beispiel 9** (Kettenverlängerung)

**Tabelle 9**: Herstellung einer Elastomerlösung mit Feststoffgehalt von 35 %

| Beispiel | Kettenabbrecher | [Äq %] | EDA | DMAc | $CO_2$ | NCO-Prepolymerlsg. | Lösungsvisk. (bei 50°C) | ηi (dl/g) |
|---|---|---|---|---|---|---|---|---|
| 9a (Vgl.) | A-CH 0,4 g | 6 % | 1,88 g | 204,3 g | 4 g | 200 g | 118 Pa.s | 0,9 |

A-CH: Aminocyclohexan

Tabelle 10: Beispiel 9 (Vergleich zu Beispiel 8)
Standzeitverhalten der Elastomerlösungen bei 25° C und 50° C

| Beispiel | Kettenabbrecher (6 %) | Lagertemp. | Lösungsviskosität [Pa.sec (50° C)] 1. | 3. | 7.Tag | Δη |
|---|---|---|---|---|---|---|
| 9 | A-CH | 25° C | 118 | 154 | verpastet | ∞ |
| | | 50° C | 118 | 172 | 288 | +85 % |

Aus Tabelle 10 wird deutlich, daß der Kettenabbrecher Aminocyclohexan gegenüber den erfindungsgemäß eingesetzten Kettenabbrechern keine Lösungsviskositätskonstanz bewirkt, d.h. die Elastomerlösungen zeigen nach 7 Tagen einen deutlichen Viskositätsanstieg. Daher ist der im Beispiel 9 genannte Kettenabbrecher für den gewünschten Einsatz in hochkonzentrierten Elastomerlösungen ungeeignet.

**Beispiel 10**

**Tabelle 10:** NCO-Prepolymerherstellung zur Herstellung der Elastomerlösung in Tabelle 11

| Polyesterdiol (wie in Beispiel 1 beschrieben) | Terathane® 2000 | DMAc | Diphenylmethan-4,4-diisocyanat | Reaktionszeit bei 50°C | NCO-Gehalt (bezogen auf Prepolymerfeststoff) | für Beispiel |
|---|---|---|---|---|---|---|
| 313,5 g | 134,4 g | 224,0 g | 74,6 g | 60 min | 1,89 % | 10 |

**Beispiel 10** (Kettenverlängerung)

**Tabelle 11:** Herstellung von Elastomerlösung mit Feststoffgehalt von 35 %

| Beispiel | Kettenabbrecher | [Aq-%] | EDA | DMAc | $CO_2$ | NCO-Prepolymerlsg. | Lösungsvisk. (bei 50°) | ηi (dl/g |
|---|---|---|---|---|---|---|---|---|
| 10 | α-ACP 0,38 g | 5 % | 1,75 g | 250,4 g | 4 g | 250 g | 189 Pa.s | 0,98 |

α-ACP: α-Aminocaprolactam

**Tabelle 12: Lösungsviskositäts-Untersuchungen**

| Beispiel | Kettenabbrecher | Lagertemperatur | Lösungsvisk. [Pa.sec (50° C)] 1. Tag | 5. Tag | Δη |
|---|---|---|---|---|---|
| 10 | α-ACP | 25° C | 189 | 175 | -7 % |
| | | 50° C | 189 | 193 | +2 % |

α-ACP: α-Aminocaprolactam

Bewertung der Lichtechtheit im Xeno-Test 150 und der Schadgasechtheit im $NO_x$-Test

Aus den Elastanfäden im Beispiel 8c-f (mit den erfindungsgemäßen Kettenabbrechern) und im Beispiel 3 (mit Diethylamin als Vergleich) wurden Strickstrümpfe hergestellt. Diese Strickstrümpfe wurden nach je drei Rezepturen behandelt:

1. Original

2 Stunden in Petrolether bei Raumtemperatur

Flotte 1:30

2. Peroxidbleiche

| | |
|---|---|
| $MgSO_4 \cdot 7H_2O$ | 0,2 g/l |
| Levapon AN fl. | 0,5 ml/l |
| Wasserglas | 2 ml/l |
| $H_2O_2$ 35 % | 6 ml/l |
| Blankophor BA fl. | 0,7 % |
| Blankophor DCB ultraf. | 0,2 % |

80 Min. bei 90 bis 95°C
Flotte 1:30

3. Saure Aufhellung

| | |
|---|---|
| Blankit IN | 2 g/l |
| Calgon T | 2 g/l |
| Diadavin EWN 200 % | 0,5 g/l |
| Blankophor Cl fl. | 0,5 g/l |

40 Min. bei 80 bis 85°C, essigsauer pH 4
Flotte 1:30

| | |
|---|---|
| Blankophore | von Firma Bayer AG |
| Diadavin | " " " " |
| Levapon | " " " " |
| Blankit | " " " " |
| Calgon T | von Firma Benckiser |

Die so behandelten Elastanstrickstrümpfe wurden zur Prüfung der Lichtechtheit 300 h dem Xeno-Test 150 und einem Stickoxidechtheitstest (DIN 54 025) unterzogen.

Aus dem Xenotest geht hervor, das die erfindungsgemäßen Kettenabbrecher gegenüber Diethylamin eine deutliche Verbesserung dr Lichtechtheit bewirken, wobei die Kettenabbrecher TMD-Imin und 1-Amino-3-methylcyclohexan die höchste Lichtechtheit im Elastan liefern.

Aus dem Stickoxidechtheitstest geht hervor, das nach der Peroxidbleiche insbesondere der Kettenabbrecher 1-Amino-2-methylcyclohexan und nach der sauren Aufhellung insbesondere die Kettenabbrecher TMD-Imin, 1-Amino-3-methylcyclohexan, 1-Amino-3,3,5-trimethylcyclohexan gegenüber dem Diethylamin eine bessere Abgasechtheit bewirken.

**Patentansprüche**

1. Verfahren zur Herstellung von Losungen segmentierter Polyurethanharnstoffe durch Umsetzung von NCO-Prepolymeren, auf Basis von Dihydroxyverbindungen mit einem Molekulargewicht von 1000 bis 8000 und überschüssigen Mengen an Diisocyanaten mit Ausnahme von 1,4-Cyclohexandiisocyanat, mit

Kettenverlängerungsmitteln mit NH-funktionellen Endgruppen, in Gegenwart von monofunktionellen primaren und/oder sekundaren Aminen als Kettenabbrecher, dadurch gekennzeichnet, daß man als Kettenabbrecher A1 bis A6

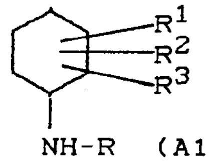 (A1) , 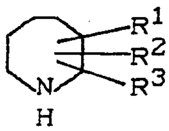 (A2) , 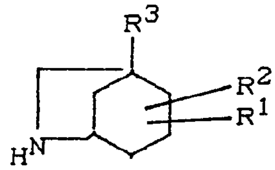 (A3) ,

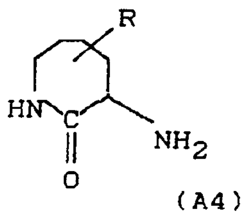 (A4) 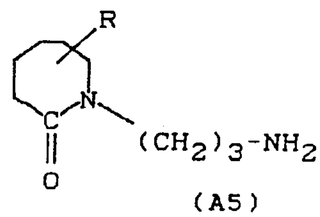 (A5) 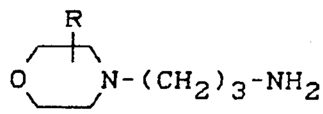 (A6)

bei denen

R = H, $C_1$-$C_4$-geradkettiger oder verzweigter Alkylrest oder Cycloalkyl,

$R^1$, $R^2$, $R^3$ = H oder $C_1$-$C_4$-geradkettiger oder verzweigter Alkylrest, jedoch mindestens ein Rest Alkyl ist, wenn nicht R bereits Alkyl oder Cycloalkyl ist,

in Mengen von 0,01 bis 10 Äquivalentprozent, bezogen auf vorhandene NCO-Äquivalente im NCO-Prepolymer, einsetzt und als Kettenverlängerer (cyclo)aliphatische Diamine mit einem Anteil von <50 % cycloaliphatischer Diamine einsetzt.

2. Verfahren nach Anspruch 1, dadurch gekennzeichnet, daß man in erster Stufe ein Prepolymer aus

a) einer hohermolekularen Dihydroxyverbindung mit Molekulargewichten von 1000 bis 8000,

b) gegebenenfalls unter Zusatz von niedermolekularen Dihydroxyverbindungen mit Molekulargewichten von 62 bis 399 in Mengen bis höchstens 15 Mol-%, bezogen auf a), und

c) molar überschüssigen Mengen an aromatischen und/oder (cyclo)aliphatischen Diisocyanaten (mit Ausnahme von 1,4-Cyclohexandiisocyanat),

d) gegebenenfalls in Gegenwart von Katalysatoren, insbesondere Zinnkatalysatoren,

e) in der Schmelze oder in Lösungsmitteln

zu einem NCO-Prepolymeren mit einem NCO-Gehalt (bezogen auf Feststoff) von 1,4 bis 4,5 Gew.-% umsetzt und

in zweiter Stufe unter Kettenverlangerung dieses NCO-Prepolymers mit

f) Lösungen von (cyclo)aliphatischen Diaminen in hochpolaren Lösungsmitteln mit Amidgruppen und

g) speziellen, monofunktionellen Kettenabbrechern/ Blockiermitteln auf Basis von Monoaminen der allgemeinen Formel A1) bis A6)

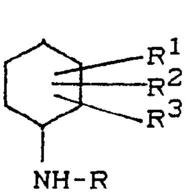 (A1) , 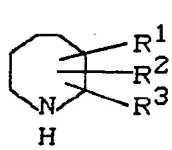 (A2) , 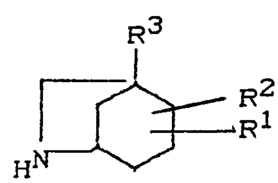 (A3) ,

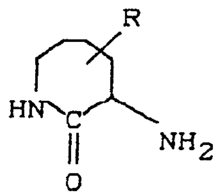
(A4)

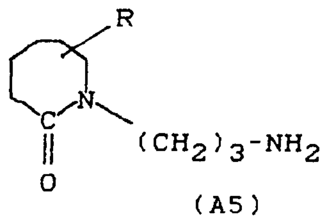
(A5)

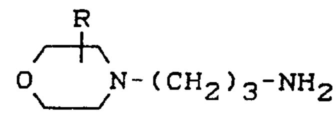
(A6)

bei denen

R = H, $C_1$-$C_4$-geradkettiger oder verzweigter Alkylrest oder Cycloalkyl,

$R^1$, $R^2$, $R^3$ = H oder $C_1$-$C_4$-geradkettiger oder verzweigter Alkylrest, jedoch mindestens ein Rest Alkyl ist, wenn nicht R bereits Alkyl oder Cycloalkyl ist, in Mengen von 0,01 bis 10 Äquivalentprozent, bezogen auf vorhandene NCO-Äquivalente im NCO-Prepolymeren,

zu Elastomerlösungen mit einer Konzentration von mindestens 15 Gew.-% Feststoffgehalt umsetzt.

**3.** Verfahrensform nach Ansprüchen 1 und 2, dadurch gekennzeichnet, daß Monoamine der Formel A1), A2), A3) und/oder A4) in Mischung mit den Kettenverlängerungsmitteln f) als Kettenabbrecher g) eingesetzt werden.

**4.** Fäden, Folien oder Beschichtungen aus segmentierten Polyurethanharnstoffen, erhalten nach Verfahren gemäß Ansprüchen 1 bis 3, enthaltend Endgruppen der Formel

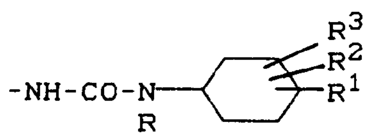

und/oder

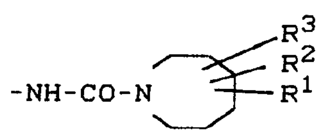

und/oder

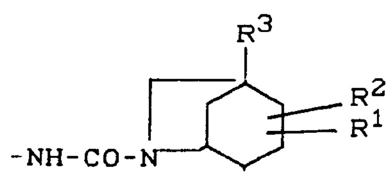

und/oder

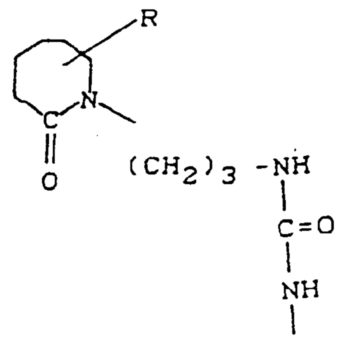

und/oder

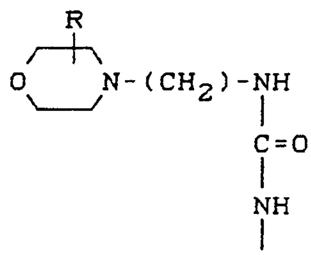

und/oder

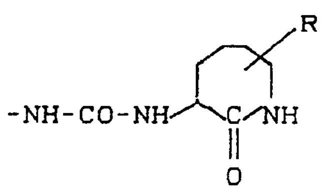 ,

bei denen

R = Wasserstoff, eine Alkylgruppe mit 1 bis 4 C-Atomen oder eine Cyclohexylgruppe,

$R^1$, $R^2$, $R^3$ Wasserstoff oder eine $C_1$-$C_4$-geradkettige oder verzweigte Alkylgruppe ist,

aber mindestens eine Alkylgruppe aufweist, wenn die Gruppe R = Wasserstoff ist.

## Claims

1. A process for the production of solutions of segmented polyurethane ureas by reaction of NCO prepolymers based on weight dihydroxy compounds having a molecular weight of 1,000 to 8,000 and excess quantities of diisocyanates except 1,4-cyclohexane diisocyanate with chain-extending agents terminated by NH-functional groups in the presence of monofunctional primary and/or secondary amines as chain terminators, characterized in that A1 to A6

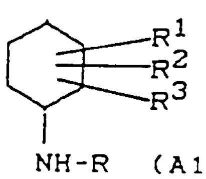 (A1) ,

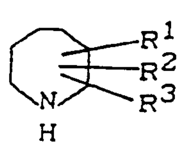 (A2) ,

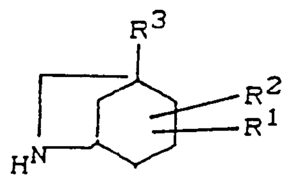 (A3) ,

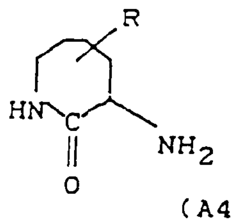

(A4)

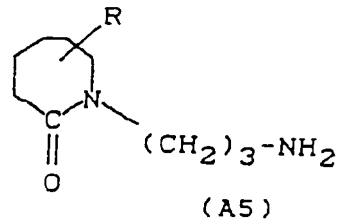

(A5)

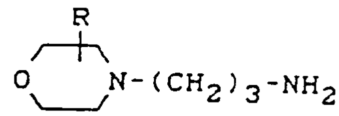

(A6)

in which R = H, a linear or branched $c_{1-4}$ alkyl radical or a cycloalkyl radical
$R^1$, $R^2$, $R^3$ = H or a linear or branched $C_{1-4}$ alkyl radical, although at least one substituent is alkyl unless R is already alkyl or cycloalkyl,
are used as chain terminators in quantities of 0.01 to 10 equivalent-%, based on NCO equivalents present in the NCO prepolymer, and preferably in a quantity of 0.5 to 7 equivalent-%.

2. A process as claimed in claim 1, characterized in that, in a first stage, a prepolymer
a) a relatively high molecular weight dihydroxy compound having molecular weights of 1,000 to 8,000 is reacted
b) optionally with addition of low molecular weight dihydroxy compounds having molecular weights of 62 to 399 in quantities of up to at most 15 mol-%, based on a), and
c) excess molar quantities of aromatic and/or (cyclo)aliphatic diisocyanates (except 1,4-cyclohexane diisocyanate),
d) optionally in the presence of catalysts, more particularly tin catalysts,
e) in the melt or in solvents,
to form an NCO prepolymer having an NCO content (based on solids) of 1.4 to 4.5% and
in a second step, the NCO prepolymer thus formed is chain-extended by reation with
f) solutions of (cyclo)aliphatic diamines in highly polar solvents containing amide groups and
g) special monofunctional chain terminators/blocking agents based on monoamines corresponding to general formulae A1) to A6)

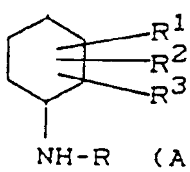

(A1) ,

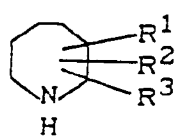

(A2) ,

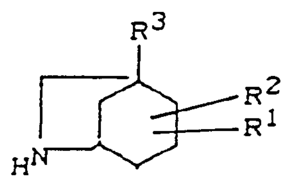

(A3) ,

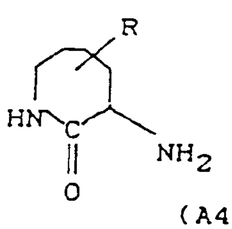

(A4)

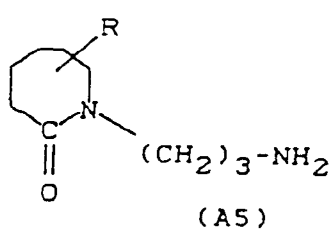

(A5)

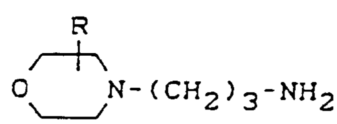

(A6)

in which R = H, a linear or branched $C_{1-4}$ alkyl radical or a cycloalkyl radical
$R^1$, $R^2$, $R^3$ = H or a linear or branched $C_{1-4}$ alkyl radical, although at least one substituent is alkyl unless R is already alkyl or cycloalkyl,
are used as chain terminators in quantities of 0.01 to 10 equivalent-%, based on NCO equivalents present in the NCO prepolymer,
to form elastomer solutions having a solids concentration of at least 15% by weight.

3. A process as claimed-in claims 1 and 2, characterized in that monoamines corresponding to formulae A1), A2), A3) and/or A4) are used in admixture with the chain-extending agents f) as chain terminators g).

4. Films, filaments or coatings of segmented polyurethane ureas obtained by the process claimed in claims 1 to 4 containing terminal groups corresponding to the formulae

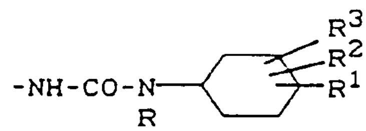

and/or

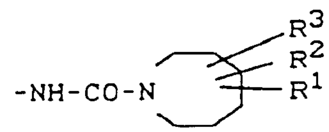

and/or

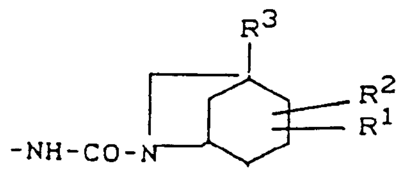

and/or

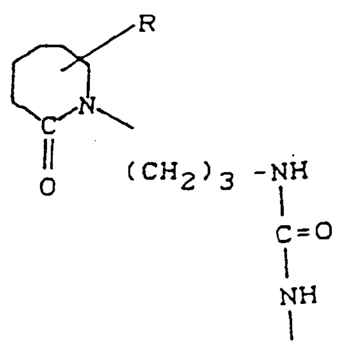

and/or

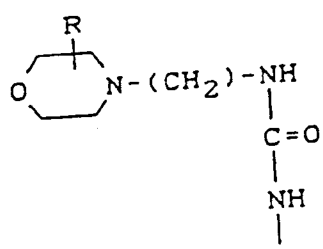

and/or

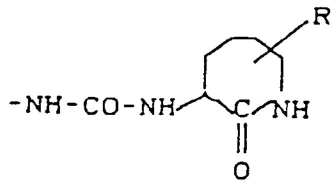

in which R = hydrogen, a $C_{1-4}$ alkyl group or a cyclohexyl group,
$R^1$, $R^2$ and $R^3$ = hydrogen or a linear or branched $C_{1-4}$ alkyl group,
but contain at least one alkyl group where R is hydrogen.

## Revendications

1. Procédé de préparation de solutions de polyuréthanne-urées segmentées par réaction de prépolymères à groupes NCO à base de composés dihydroxylés de poids moléculaire 1 000 à 8 000 et d'un excès de diisocyanates, à l'exception du 1,4-cyclohexane-diisocyanate, avec des agents d'allongement des chaînes à groupes terminaux à fonction NH, en présence d'amines monofonctionnelles primaires et/ou secondaires servant de coupeurs de chaînes, caractérisé en ce que l'on utilise en tant que coupeurs de chaînes les composés de formules A1 à A6:

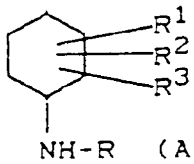 (A1), 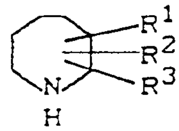 (A2), 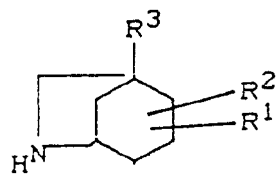 (A3),

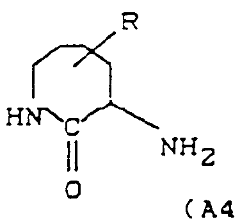 (A4) 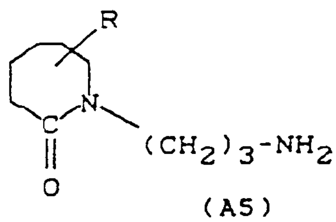 (A5) 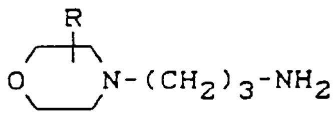 (A6)

dans lesquelles
R = H, alkyle à chaîne droite ou ramifiée en $C_1$-$C_4$ ou cycloalkyle,
$R^1$, $R^2$, $R^3$ = H ou alkyle à chaîne droite ou ramifiée en $C_1$-$C_4$, sous réserve qu'au moins un de ces symboles représente un groupe alkyle lorsque R ne représente pas déjà un groupe alkyle ou cycloalkyle,
en quantités de 0,01 à 10 équivalents %, par rapport aux équivalents de NCO présents dans le prépolymère à groupes NCO, et on utilise en tant qu'agents d'allongement des chaînes des diamines (cyclo)aliphatiques contenant moins de 50 % de diamines cycloaliphatiques.

2. Procédé selon revendication 1, caractérisé en ce que, dans un premier stade opératoire, on convertit un prépolymère de
   a) un composé dihydroxylé à haut poids moléculaire, de poids moléculaire 1 000 à 8 000,
   b) le cas échéant avec adjonction de composés dihydroxylés à bas poids moléculaire, de poids moléculaire 62 à 399, en quantités allant jusqu'à 15 mol % au maximum par rapport à a), et
   c) un excès molaire de diisocyanates aromatiques et/ou (cyclo)aliphatiques (à l'exception du 1,4-cyclohexane-diisocyanate),
   d) éventuellement en présence de catalyseurs, en particulier des catalyseurs à base d'étain,
   e) à l'état fondu ou dans des solvants,
   en un prépolymère à groupes NCO à une teneur en NCO (sur les matières solides) de 1,4 à 4,5 % en

poids, et

dans un deuxième stade opératoire, avec allongement des chaînes, on convertit ce prépolymère à groupes NCO, par

f) des solutions de diamines (cyclo)aliphatiques dans des solvants fortement polaires à groupes amide, et

g) des coupeurs de chaînes/agents bloquants monofonctionnels à base des monoamines de formules générales A1) à A6):

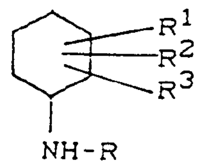
(A1)
,
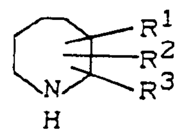
(A2)
,
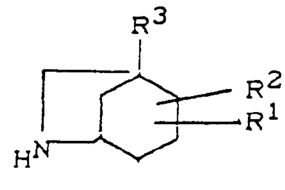
(A3)
,

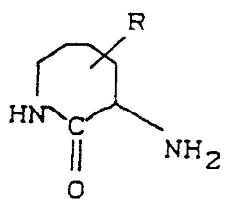
(A4)

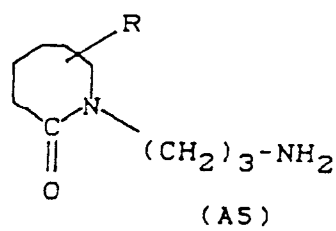
(A5)

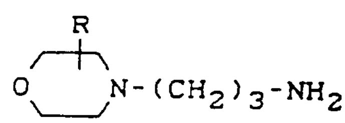
(A6)

dans lesquelles

R = H, alkyle à chaîne droite ou ramifiée en $C_1$-$C_4$ ou cycloalkyle,

$R^1$, $R^2$, $R^3$ = H ou alkyle à chaîne droite ou ramifiée en $C_1$-$C_4$, sous réserve que l'un au moins de ces symboles représente un groupe alkyle lorsque R ne représente pas déjà un groupe alkyle ou cycloalkyle, en quantités de 0,01 à 10 équivalents %, par rapport aux équivalents de NCO présents dans le prépolymère à groupes NCO, en solutions d'élastomères à une concentration d'au moins 15 % en poids de matières solides.

**3.** Variante du procédé selon les revendications 1 et 2, caractérisée en ce que l'on met en oeuvre les monoamines de formules A1), A2), A3) et/ou A4) en mélange avec les agents d'allongement de chaînes f) en tant que coupeurs de chaînes g).

**4.** Filaments, feuilles ou revêtements en polyuréthanne-urées segmentées, obtenus par un procédé selon les revendications 1 à 3, contenant des groupes terminaux de formules:

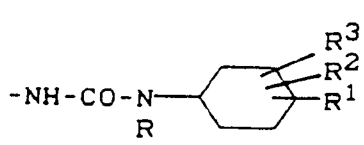

et/ou

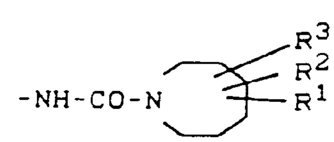

et/ou

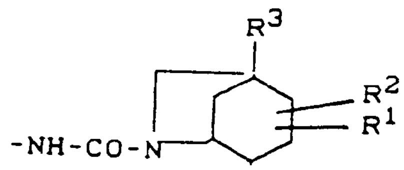

et/ou

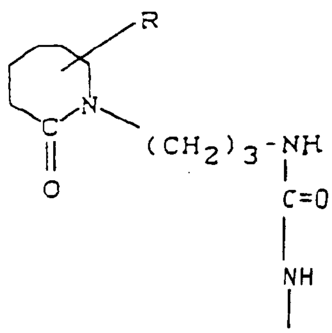

et/ou

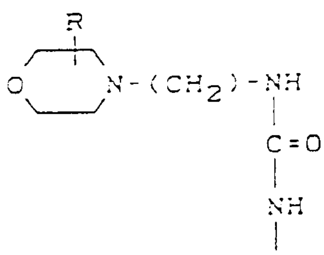

et/ou

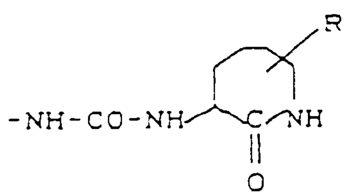

dans lesquelles
R = hydrogène, groupe alkyle en $C_1$-$C_4$ ou groupe cyclohexyle,
$R^1$, $R^2$, $R^3$ = hydrogène ou alkyle à chaîne droite ou ramifiée en $C_1$-C4, avec au moins un groupe alkyle lorsque R = hydrogène.